# NEUE EUROPÄISCHE PATENTSCHRIFT

(11) **EP 1 316 777 B2**
(45) Veröffentlichungstag und Bekanntmachung des Hinweises auf die Entscheidung über den Einspruch: **02.12.2009**
(45) Hinweis auf die Patenterteilung: 03.01.2007
(21) Anmeldenummer: 02025368.8
(22) Anmeldetag: 14.11.2002
(51) Int. Cl.: G01B 5/004, G01B 5/008, G01B 7/004, G01B 7/008, G01B 21/04

(54) **Verfahren und Vorrichtung zum räumlichen Vermessen von Werkstücken an einer Werkzeugmaschine**
Method and device for the three dimensional measuring of workpieces on a machine tool
Procédé et dispositif de mesure en trois dimensions de pièces usinées sur une machine-outil

(30) Priorität: 22.11.2001 DE 10157174
(43) Veröffentlichungstag der Anmeldung: 04.06.2003
(73) Patentinhaber: m & h inprocess messtechnik GmbH, 88289 Waldburg (DE)
(72) Erfinder: Madlener, Wolfgang, 88212 Ravensburg (DE); Veil, Wilfried, 88211 Ravensburg (DE)
(74) Vertreter: Eisele, Otten, Roth & Dobler

(56) Entgegenhaltungen:
- EP-A- 0 519 638
- DE-C- 4 325 602
- GB-A- 2 108 715
- US-A- 4 901 256
- US-A- 5 003 484
- US-A- 5 615 489
- DAVID COLEMAN/FRED WATERS: 'Fundamentals of touch trigger probing', 1997, TOUCH TRIGGER PRESS, ISBN 0951201018

## Beschreibung

Die Erfindung betrifft ein Verfahren und eine Vorrichtung zum räumlichen Vermessen von Werkstücken an einer Werkzeugmaschine nach dem Oberbegriff des Anspruchs 1 bzw. 8.

### Stand der Technik

Zum Vermessen von Werkstücken an Werkzeugmaschinen werden regelmäßig Messtaster eingesetzt. Diese erzeugen bei der Berührung mit einem Werkstück oder kurz danach ein Signal, aus dem in Kombination mit XYZ-Koordinaten einer Einrichtung zum Verfahren des Messtasters ein Messwert bestimmt wird.

Insbesondere bei Werkzeugmaschinen stellt sich jedoch das Problem, dass vergleichsweise robuste Messtaster eingesetzt werden, um eine gewisse Erschütterungsunempfindlichkeit zur Vermeidung von Fehlschaltungen zu erreichen.

Robuste Messtaster weisen jedoch immer eine vergleichsweise große physikalische Messungenauigkeit auf. Diese ist zudem abhängig von z.B. der Anfahrrichtung in Bezug auf eine Werkstückoberfläche und der Anfahrgeschwindigkeit.

Dies liegt daran, dass die Position eines Taststifts in einer Messtasterlagerung nicht exakt reproduzierbar ist. Des Weiteren führen unterschiedliche Anfahrgeschwindigkeiten zu verschiedenen großen Verformungen (insbesondere Biegung) am Taststift und damit unterschiedlichen Verzögerungszeiten für die Auslösung eines Messsignals.

Um an Werkzeugmaschinen dennoch eine akzeptable Messgenauigkeit zu erhalten, wird ein Messtaster vor dem Messvorgang an einer Messkugel kalibriert. Wenn die Position der Messkugel bekannt ist, lassen sich für einige Kalibrierpunkte auf der Messkugeloberfläche Korrekturwerte bestimmen, aus denen dann alle weiteren Korrekturwerte für andere Stellen interpoliert werden.

Der an einer Stelle aufgenommene Messwert lässt sich für eine verbesserte Genauigkeit mit einem entsprechenden Korrekturwert korrigieren. Dabei wird darauf geachtet, dass der interpolierte Korrekturwert eines Punktes auf der Kugeloberfläche herangezogen wird, bei dem die Tangentialebene in diesem Punkt zumindest näherungsweise parallel ist zu der Tangentialebene an der Messstelle am Werkstück.

Durch die Interpolation entstehen jedoch nicht unbeträchtliche Fehler. Nur im Ausnahmefall stimmt zufällig die Ausrichtung der Messstelle mit einem der Kalibrierpunkte überein, die für die Interpolation der übrigen Punkte an der Kalibrierkugeloberfläche herangezogen wurde.

Um sich nicht auf interpolierte Korrekturwerte verlassen zu müssen, wird in der deutschen Patentschrift DE 43 25 602 C1 ein Verfahren zum taktilen Vermessen von Werkstücken vorgeschlagen, bei dem zur Ausmessung eines Werkstücks, insbesondere der serienmäßigen Ausmessung von gleichen Werkstücken, die Messpunkte des Werkstücks auf die Oberfläche einer Kalibrierkugel bekannten Durchmessers richtungsmäßig übertragen werden. Mit dem jedem einzelnen Messpunkt zugeordneten Taster wird in den einzelnen Antastrichtungen des Werkstücks auf der Kugel ein Offset ermittelt und bei der Antastung des Werkstücks in der ermittelten Größe berücksichtigt.

### Aufgabe und Vorteile der Erfindung

Der Erfindung liegt die Aufgabe zugrunde, das räumliche Vermessen von Werkstücken an einer Werkzeugmaschine mit vergleichsweise geringem Aufwand im Hinblick auf die Genauigkeit der Messung zu verbessern.

Diese Aufgabe wird durch die Ansprüche 1 und 8 gelöst.

In den Unteransprüchen sind vorteilhafte und zweckmäßige Weiterbildungen der Erfindung angegeben.

Zunächst geht die Erfindung von einem Verfahren zum räumlichen Vermessen von Werkstücken an einer Werkzeugmaschine mit einem Messtaster aus, wobei bei der Werkzeugmaschine die Sollkoordinaten eines herzustellenden Werkstücks als XYZ-Koordinaten der Werkzeugmaschine zur Bewegung des Werkzeugs für die Herstellung des Werkstücks in rechnerverwertbarer Form zur Verfügung stehen. Der Kern der Erfindung liegt nun darin, dass beliebige Messstellen auf dem Werkstück ausgewählt werden, dass an einem bekannten Kalibrierkörper, d.h. einem Körper, dessen Oberflächenkoordinaten dem System bekannt sind, Kalibrierpunkte angefahren werden, bei welchen eine jeweilige Tangentialebene für den Kalibrierpunkt zu einer Tangentialebene wenigstens einer ausgewählten beliebigen Messstelle wenigstens näherungsweise parallel ist, wobei die Koordinaten der zugehörigen Kalibrierpunkte am Kalibierkörper auf der Grundlage von Daten der beliebigen Messstellen und der Sollkoordinaten ermittelt werden, und wobei für jeden Abtastvorgang am Kalibrierkörper ein Korrekturwert bestimmt wird, und dass mit dem Messtaster an den ausgewählten Messstellen gemessen wird, wobei ein normierter Anfahrvektor und eine Anfahrgeschwindigkeit für das Anfahren eines Kalibrierpunktes und einer dazugehörigen Messstelle am Werkstück, nämlich einer Messstelle mit einer Tagentialebene, die parallel zur Tagentialebene des Kalibierpunktes ist, im Wesentlichen gleich sind, und wobei der jeweils ermittelte Korrekturwert eines Kalibrierpunktes am Kalibrierkörper für die Bestimmung des Messwertes einer dazugehörigen Messstelle mit zum Kalibierpunkt wenigstens näherungsweise parallelen Tangentialebene in Ansatz gebracht wird. Unter Tangentialebene wird im Sinne der Erfindung die Ebene verstanden, die senkrecht zu einer Senkrechten auf der Werkstückoberfläche an der Messstelle bzw. dem Kalibierpunkt verläuft. Sofern die Messstelle in einer Ebene liegt, fällt die Tangentialebene von jedem Punkt dieser Ebene mit der Ebene selbst zusammen. Die Erfindung macht sich den Umstand zunutze, dass an computergesteuerten Werkzeugmaschinen zur Messung an Werkstücken mittels Messtastern, die wie Werkzeuge an der Werkzeugmaschine bewegt werden, zu deren Kalibrierung die ohnehin in einer rechnerverwertbaren Form vorhandenen Daten von Werkstücken, die für eine Werkzeugbewegung erforderlich sind, genutzt werden können. Damit lassen sich auf verblüffend einfache Weise die normalerweise durch Interpolation gewonnenen Korrekturwerte durch Korrekturwerte im Hinblick auf Kalibierpunkte eines Kalibrierkörpers, z.B. einer Messkugel, ersetzen, die wenigstens ansatzweise die gleiche Ausrichtung in einem XYZ-Koordinatensystem besitzen. Hierdurch lassen sich zufällige Fehler, die durch keine Interpolation erfasst werden können, im Wesentlichen vermeiden, was die Messergebnisse letzten Endes genauer macht.

Sofern an einer Vielzahl von Stellen am Werkstück gemessen werden soll, kann rechnerunterstützt der Messvorgang auch so vorgenommen werden, dass möglichst kurze Verfahrwege für den Messtaster zustande kommen.

Im Weiteren kann der Kalibriervorgang zur Ermittlung eines Korrekturwertes und der eigentliche Messvorgang in verschiedener Reihenfolge ablaufen. Es ist beispielsweise nicht erforderlich, dass für Punkte an einer Kalibrierkugel Korrekturwerte ermittelt werden, um im Anschluss daran an entsprechenden Stellen des Werkstücks in gewünschter Weise zu messen. Vielmehr kann auch zunächst an gewünschten Stellen des Werkstücks eine Messung vorgenommen und dann an entsprechenden Punkten der Kalibrierkugel der dazugehörige Korrekturwert für die Errechnung eines korrigierten Messwertes ermittelt werden.

Um die Genauigkeit bei der Messung an mehreren Messpunkten am Werkstück weiter zu verbessern, wird überdies vorgeschlagen, dass ein Punkt kalibriert und dann die dazugehörige Messstelle am Werkstück zur Messung angefahren wird. Eine weitere Möglichkeit kann darin bestehen, dass Messpunkte blockweise kalibriert und dann jeweils die dazugehörigen Messstellen am Werkstück angetastet werden.

Für die Erzielung einer hohen Reproduzierbarkeit bei einer Messung und damit einer großen Genauigkeit wird überdies vorgeschlagen, dass die Anfahrvektoren für die Messstelle und die Kalibrierpunkte zumindest annähernd orthogonal zur Tangentialebene sind. Damit werden Relativbewegungen der Messkugel eines Messtasters zur Messoberfläche und damit unerwünschte Reibungen im Wesentlichen ausgeschaltet.

Vorzugsweise sind nicht nur die Richtungen der Anfahrvektoren, sondern auch deren Beträge im Kalibrierpunkt und an der dazugehörigen Messstelle wenigstens annähernd gleich. Damit lässt sich die Messgenauigkeit weiter verbessern.

Zur weiteren Optimierung der Messgenauigkeit wird überdies vorgeschlagen, dass der zeitliche Zusammenhang zwischen Kalibrierung und Messung vergleichsweise kurz gewählt wird. Auf diese Weise lassen sich zeitabhängige Einflüsse auf den Messvorgang, z.B. thermische Einflüsse oder das Verhalten eines Antriebs in der Warmlaufphase und z.B. nach 2 Stunden, weitgehend eliminieren.

Bei einer Vorrichtung zum räumlichen Vermessen von Werkstücken an einer Werkzeugmaschine, bei welcher die Sollkoordinaten eines herzustellenden Werkstücks als XYZ-Koordinaten der Werkzeugmaschine zur Bewegung des Werkzeugs für die Herstellung des Werkstücks in rechnerverwertbarer Form zur Verfügung stehen, und die einen Messtaster und eine Rechnereinheit umfasst, liegen die wesentlichen Aspekte der Erfindung darin, dass die Rechnereinheit zur Auswahl von beliebigen Messstellen auf dem Werkstück, an denen der Messtaster eine Messung am tatsächlich gefertigten Werkstück vornehmen soll und zum Durchführen eines Antastvorganges des Messtasters an einem bekannten Kalibrierkörper an Kalibrierpunkten ausgelegt ist, bei welchen eine jeweilige Tangentialebene zu einer Tangentialebene wenigstens einer ausgewählten beliebigen Messstelle wenigstens näherungsweise parallel ist. Wesentlich dabei ist, dass die Rechnereinheit die entsprechenden Kalibrierpunkte aus Daten des ausgewählten Messpunktes und den Sollkoordinaten ermittelt. Die Rechnereinheit bestimmt außerdem für jeden Antastvorgang am Kalibrierkörper einen Korrekturwert und ist zum Anfahren des Messtasters an den ausgewählten Stellen am gefertigten Werkstück für die Vornahme einer Messung ausgelegt. Der jeweils ermittelte Korrekturwert eines Kalibrierpunktes am Kalibrierkörper wird für die Bestimmung des Messwertes einer Messstelle mit zum jeweiligen Kalibierpunkt wenigstens näherungsweise paralleler Tangentialebene in Ansatz gebracht. Für den Anfahrvorgang ist es wichtig, dass ein normierter Anfahrvektor und eine Anfahrgeschwindigkeit beim Anfahren des jeweiligen Kalibrierpunktes und der dazugehörigen Messstelle am Werkstück zumindest im Wesentlichen gleich sind.

Die Rechnereinheit kann durch einen externen PC bereitgestellt werden. In einer bevorzugten Lösung kann jedoch auch als Rechnereinheit der Steuerrechner der Werkzeugmaschine verwendet werden. Hierdurch lässt sich ein externer PC einsparen.

### Zeichnungen

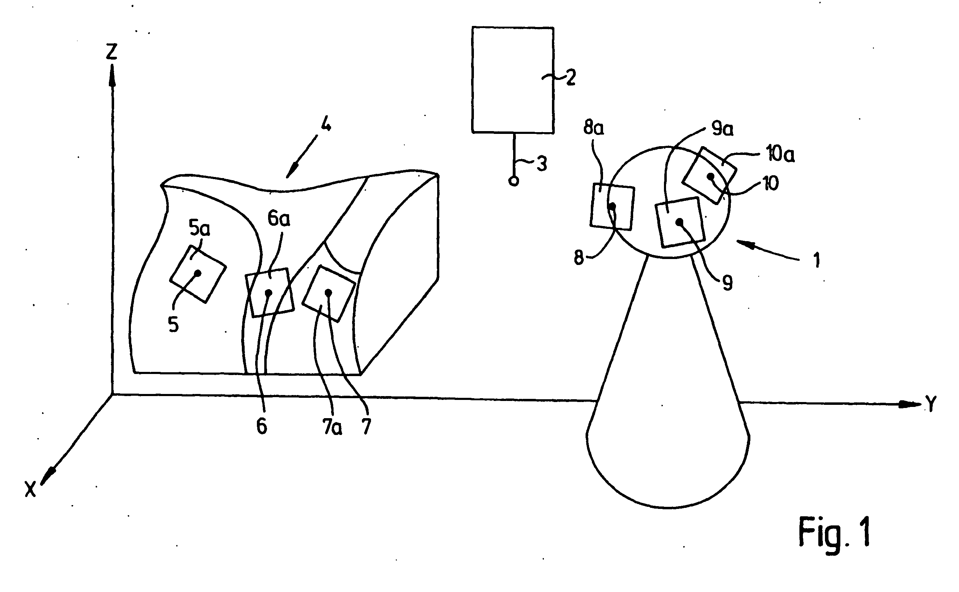

Ein Ausführungsbeispiel der Erfindung ist in den Zeichnungen dargestellt und unter Angabe weiterer Vorteile und Einzelheiten näher erläutert. Die Figur zeigt in einer stark schematisierten dreidimensionalen Ansicht den Messaufbau zum räumlichen Vermessen eines Werkstücks.

### Beschreibung des Ausführungsbeispiels

In der Figur ist eine Kalibrierkugel 1, ein Messtaster 2 mit Taststift 3 und ein Werkstück 4 in Bezug auf ein XYZ-Koordinatensystem dargestellt. Nach der Bearbeitung des Werkstücks 4 durch ein Werkzeug (nicht dargestellt) in einer Werkzeugmaschine (nicht dargestellt) ist es regelmäßig erforderlich, das Werkzeug 4 auf Maßhaltigkeit zu prüfen. Hierzu werden normalerweise mehrere Messpunkte am Werkstück 4 mit dem Messtaster 2 angefahren.

An Werkzeugmaschinen werden im Allgemeinen robuste Messtaster eingesetzt, die dementsprechend eine vergleichsweise große Wiederholungenauigkeit haben.

Zur Reduzierung der physikalischen Ungenauigkeit werden z.B. im Hinblick auf Messstellen 5, 6, 7 an einer Kalibrierkugel 1 Korrekturwerte ermittelt.

Hierzu werden für die gewünschten Messstellen 5, 6, 7 anhand von Rechnerkoordinaten für das Werkstück 4, die an der Werkzeugmaschine zur Bewegung der erforderlichen Werkzeuge ohnehin in rechnerverwertbarer Form zur Verfügung stehen, Kalibrierpunkte 8, 9, 10 an der Kalibrierkugel 1 bestimmt, an denen die Tangentialebene 8a, 9a, 10a jeweils parallel sind zu den jeweiligen Tangentialebenen 5a, 6a, 7a der Punkte 5, 6, 7. Das heißt, die Tangentialebene 8a ist parallel zur Tangentialebene 5a usw..

Diese Punkte an der Kalibrierkugel 1 werden nun mit dem Messtaster 2 angefahren und jeweils Korrekturwerte ermittelt, indem bekannte tatsächliche Koordinaten der Kalibrierkugel mit den gemessenen Koordinaten verglichen werden.

Die Punkte 8, 9, 10 werden so angefahren, dass die Anfahrrichtung wenigstens annähernd senkrecht auf der jeweiligen Tangentialebene 8a, 9a, 10a steht.

Zusätzlich werden für jeden Punkt der Abstand eines Startpunktes zu diesem Punkt sowie die Anfahrgeschwindigkeit festgehalten. Vorzugsweise sind die jeweiligen Abstände und die Anfahrgeschwindigkeiten an den Punkten 8, 9, 10 gleich.

Bei der Messung am Werkstück 4, z.B. am Punkt 5, wird nun der gleiche Anfahrvektor wie am Kalibrierpunkt 8 mit gleicher Anfahrgeschwindigkeit verwendet. Das heißt, die Anfahrrichtung ist senkrecht zu den Tangentialebenen 5a, 8a und der Abstand der Startposition zur Messstelle 5 ist der gleiche, wie er bei der Durchführung der Kalibriermessung am Kalibrierpunkt 8 war.

Zur Bestimmung des Messwertes an der Messstelle 5 wird der gemessene Messwert um den zuvor am Kalibrierpunkt 8 ermittelten Korrekturwert berichtigt.

Da am Kalibrierpunkt 8 die gleiche Anfahrbewegung wie bei der Messung an der Messstelle 5 durchgeführt wird, ist der am Kalibrierpunkt 8 ermittelte Korrekturwert auch für die Messung an der Messstelle 5 zumindest annähernd zutreffend.

Bei der Messung an der Messstelle 6 wird entsprechend der Korrekturwert am Kalibrierpunkt 9 und bei der Messung bei der Messstelle 7 der Korrekturwert vom Kalibrierpunkt 10 an der Messkugel herangezogen.

Dabei wird darauf geachtet, dass die Anfahrbewegung des Messtasters zumindest der zusammengehörenden Messstellen und Kalibrierpunkte jeweils die gleiche ist.

Durch diese Maßnahme lassen sich Fehler, wie Sie normalerweise bei einer Interpolation von Korrekturwerten auftreten, welche z.B. an der Kalibrierkugel aus einem Netz von fest vorgegebenen Kalibrierpunkten gewonnen werden, vermeiden.

Die erfindungsgemäße Vorgehensweise läßt sich in einfacher Weise verwirklichen, da für die Bestimmung der individuellen Kalibrierpunkte an der Kalibrierkugel die im Rechner schon vorhandenen Daten des Werkstücks herangezogen werden.

Bezugszeichenliste:
- 1: Kalibrierkugel
- 2: Messtaster
- 3: Taststift
- 4: Werkstück
- 5: Messstelle
- 5a: Tangentialebene
- 6: Messstelle
- 6a: Tangentialebene
- 7: Messstelle
- 7a: Tangentialebene
- 8: Kalibrierpunkt
- 8a: Tangentialebene
- 9: Kalibrierpunkt
- 9a: Tangentialebene
- 10: Kaliebrierpunkt
- 10a: Tangentialebene

## Patentansprüche

1. Verfahren zum räumlichen Vermessen von Werkstücken (4) mit einem Messtaster (2) an einer Werkzeugmaschine, bei welcher die Sollkoordinaten eines herzustellenden Werkstücks als XYZ-Koordinaten der Werkzeugmaschine zur Bewegung des Werkzeugs für die Herstellung des Werkstücks in rechnerverwertbarer Form zur Verfügung stehen, **dadurch gekennzeichnet, dass** beliebige Messstellen (5, 6, 7) auf dem Werkstück (4) ausgewählt werden,
dass an einem bekannten Kalibrierkörper (1) Kalibrierpunkte (8, 9, 10) angefahren werden, bei welchen eine jeweilige Tangentialebene (8a, 9a, 10a) zu einer Tangentialebene (5a, 6a, 7a) wenigstens einer ausgewählten beliebigen Messstelle (5, 6, 7) wenigstens näherungsweise parallel ist, wobei die Koordinaten der zugehörigen Kalibrierpunkte am Kalibrierkörper auf der Grundlage von Daten der beliebigen Messstellen (5, 6, 7) und der Sollkoordinaten ermittelt werden, und wobei für jeden Antastvorgang am Kalibrierkörper (1) ein Korrekturwert bestimmt wird,
und dass mit dem Messtaster an den ausgewählten Messstellen gemessen wird, wobei ein normierter Anfahrvektor und eine Anfahrgeschwindigkeit für das Anfahren eines Kalibrierpunktes (8, 9, 10) und einer dazugehörigen Messstelle (5, 6, 7). am Werkstück (4) zumindest im Wesentlichen gleich sind, dass die Anfahrvektoren für die Messstelle und die Kalibrierpunkte zumindest annähernd orthogonal zur Tangentialebene sind und wobei der jeweils ermittelte Korrekturwert eines Kalibrierpunktes (8, 9, 10) am Kalibrierkörper (1) für die Bestimmung des Messwertes einer dazugehörigen Messstelle (5, 6, 7) in Ansatz gebracht wird.

2. Verfahren nach Anspruch 1, **dadurch gekennzeichnet, dass** der Anfahrvorgang der Messstellen (5, 6, 7) am Werkstück (4) derart vorgenommen wird, dass möglichst kurze Verfahrwege zustande kommen.

3. Verfahren nach einem der vorhergehenden Ansprüche, **dadurch gekennzeichnet, dass** zuerst die Messung an den ausgewählten Messstellen (5, 6, 7) und dann die Bestimmung eines dazugehörigen Korrekturwertes am Kalibrierkörper (1) vorgenommen wird, um daraus korrigierte Messwerte zu ermitteln.

4. Verfahren nach einem der vorhergehenden Ansprüche, **dadurch gekennzeichnet, dass** der Anfahrvektor für die jeweilige Messstelle (5, 6, 7) und den dazugehörigen Kalibrierpunkt (8, 9, 10) zumindest annähernd orthogonal zur jeweiligen Tangentialebene (5a, 6a, 7a, 8a, 9a, 10a) ist.

5. Verfahren nach einem der vorhergehenden Ansprüche, **dadurch gekennzeichnet, dass** der zeitliche Zusammenhang zwischen Kalibrierung und Messung vergleichsweise kurz gewählt wird.

6. Verfahren nach einem der vorhergehenden Ansprüche, **dadurch gekennzeichnet, dass** ein Punkt (8) kalibriert und dann die dazugehörige Messstelle (5) am Werkstück gemessen wird.

7. Verfahren nach einem der vorhergehenden Ansprüche, **dadurch gekennzeichnet, dass** mehrere Punkte (8, 9) kalibriert und dann die dazugehörigen Messstellen (5, 6) gemessen werden.

8. Vorrichtung zum räumlichen Vermessen von Werkstücken (4) an einer Werkzeugmaschine, bei welcher die Sollkoordinaten eines herzustellenden Werkstücks (4) als XYZ-Koordinaten der Werkzeugmaschine zur Bewegung des Werkzeugs für die Herstellung des Werkstücks in rechnerverwertbarer Form zur Verfügung stehen, mit einem Messtaster (2) und einer Rechnereinheit, **dadurch gekennzeichnet, dass** die Rechnereinheit zur Auswahl von beliebigen Messstellen (5, 6, 7) auf dem Werkstück (4), an denen der Messtaster (2) eine Messung am tatsächlichen gefertigten Werkstück (4) vornehmen soll und zum Durchführen eines Antastvorgangs des Messtasters (2) an einem bekannten Kalibrierkörper (1) an Punkten (8, 9, 10) ausgelegt ist, bei welchen eine jeweilige Tangentialebene (8a, 9a, 10a) zu einer Tangentialebene (5a, 6a, 7a) wenigsten einer ausgewählten beliebigen Messstelle (5, 6, 7) wenigsten näherungsweise parallel ist, wobei die Rechnereinheit die zugehörigen Kalibrierpunkte (8, 9, 10) am Kalibrierkörper (1) auf der Grundlage von Daten der jeweiligen Messstellen (5, 6, 7) und der Sollkoordinaten ermittelt und wobei die Rechnereinheit für jeden Autastvorgang am Kalibrierkörper (1) einen Korrekturwert bestimmt und dass die Rechnereinheit zum Anfahren des Messtasters an den ausgewählten Messstellen (5, 6, 7) am gefertigten Werkzeug für die Vornahme einer Messung ausgelegt ist, wobei normierte Anfahrvektoren und Aufahrgeschwindigkeiten für das Anfahren der jeweiligen Kalibrierpunkte (8, 9, 10) und der dazugehörigen Messstellen (5, 6, 7) am Werkstück zumindest im Wesentlichen gleich sind, dass die Anfangvektoren für die Messstelle und die Kalibrierpunkte zumindest annähernd orthogonal zur Tangentialebene sind und wobei der jeweils ermittelte Korrekturwert eines Kalibrierpunktes (8, 9, 10) am Kalibrierkörper (1) für die Bestimmung des Messwertes einer Messstelle (5, 6, 7) mit zum jeweiligen Kalibierpunkt (8, 9, 10) wenigstens näherungsweise paralleler Tangentialebene (5a, 6a, 7a) in Ansatz gebracht wird.

9. Vorrichtung nach Anspruch 8, **dadurch gekennzeichnet, dass** die Rechnereinheit, die eines externen PC ist.

10. Vorrichtung nach Anspruch 8 oder 9, **dadurch gekennzeichnet, dass** die Rechnereinheit ein Steuerrechner der Werkzeugmaschine ist.

## Claims

1. Method for the three-dimensional measurement of workpieces (4) comprising a probe (2) on a machine tool, in which the desired coordinates of a workpiece to be produced are available in computer-usable form as XYZ-coordinates of the machine tool to move the tool for the production of the workpiece, **characterised in that** arbitrary measurement points (5, 6, 7) are selected on the workpiece (4), **in that** calibration points (8, 9, 10) are approached on a known calibration body (1), at which a respective tangential plane (8a, 9a, 10a) is at least approximately parallel to a tangential plane (5a, 6a, 7a) of at least one selected arbitrary measurement point (5, 6, 7), wherein the coordinates of the associated calibration points are determined on the calibration body on the basis of data of the arbitrary measurement points (5, 6, 7) and the desired coordinates, and wherein a correction value is determined for every touch process on the calibration body (1), and **in that** a measurement is made with the probe at the selected measurement points, wherein a standardised approach vector and an approach speed for the approaching of a calibration point (8, 9, 10) and an associated measurement point (5, 6, 7) on the workpiece (4) are at least substantially the same, **in that** the approach vectors for the measurement point and the calibration points are at least approximately orthogonal to the tangential plane and wherein the respectively determined correction value of a calibration point (8, 9, 10) on the calibration body (1) is used to determine the measurement value of an associated measurement point (5, 6, 7.).

2. Method according to claim 1, **characterised in that** the approach process of the measurement points (5, 6, 7) on the workpiece (4) is carried out in such a way that movement paths which are as short as possible are established.

3. Method according to any one of the preceding claims, **characterised in that**, firstly, the measurement is carried out on the selected measurement points (5, 6, 7) and then the determination of an associated correction value on the calibration body (1) is carried out in order to determine corrected measurement values therefrom.

4. Method according to any one of the preceding claims, **characterised in that** the approach vector for the respective measurement point (5, 6, 7) and the associated calibration point (8, 9, 10) is at least approximately orthogonal to the respective tangential plane (5a, 6a, 7a, 8a, 9a, 10a).

5. Method according to any one of the preceding claims, **characterised in that** the time connection between the calibration and measurement is selected to be comparatively short.

6. Method according to any one of the preceding claims, **characterised in that** a point (8) is calibrated and then the associated measurement point (5) on the workpiece is measured.

7. Method according to any one of the preceding claims, **characterised in that** a plurality of points (8, 9) are calibrated and then the associated measurement points (5, 6) are measured.

8. Device for the three-dimensional measuring of workpieces (4) on a machine tool, in which the desired coordinates of a workpiece (4) to be produced are available in computer-usable form as XYZ coordinates of the machine tool to move the tool for the production of the workpiece, comprising a probe (2) and a computer unit, **characterised in that** the computer unit is designed to select arbitrary measurement points (5, 6, 7) on the workpiece (4), on which the probe (2) is to carry out a measurement on the actually produced workpiece (4) and to carry out a touch process of the probe (2) on a known calibration body (1) at points (8, 9, 10), in which a respective tangential plane (8a, 9a, 10a) is at least approximately parallel to a tangential plane (5a, 6a, 7a) at least of a selected arbitrary measurement point (5, 6, 7) wherein the computer unit determines the associated calibration points (8, 9, 10) on the calibration body (1) on the basis of data of the respective measurement points (5, 6, 7) and the desired coordinates and wherein the computer unit determines a correction value for each touch process on the calibration body (1) and **in that** the computer unit is designed for the approaching of the probe to the selected measurement points (5, 6, 7) on the produced tool to carry out a measurement, wherein standardised approach vectors and approach speeds for the approaching of the respective calibration points (8, 9, 10) and the associated measurement points (5, 6, 7) on the workpiece are at least substantially the same, **in that** the approach vectors for the measurement point and the calibration points are at least approximately orthogonal to the tangential plane and wherein the respectively determined correction value of a calibration point (8, 9, 10) on the calibration body (1) is used for the determination of the measurement value of a measurement point (5, 6, 7) with a tangential plane (5a, 6a, 7a) which is at least approximately parallel to the respective calibration point (8, 9, 10).

9. Device according to claim 8, **characterised in that** the computer unit is that of an external PC.

10. Device according to claim 8 or 9, **characterised in that** the computer unit is a control computer of the machine tool.

## Revendications

1. Procédé de mesure en trois dimensions de pièces usinées (4) comportant un palpeur de mesure (2) sur une machine-outil, dans laquelle les coordonnées théoriques d'une pièce à fabriquer sont mises à disposition sous une forme exploitable informatiquement en tant que coordonnées XYZ de la machine-outil pour le déplacement de l'outil pour la fabrication de la pièce usinée,
**caractérisé en ce que** l'on choisit des points de mesure quelconques (5, 6, 7) sur la pièce usinée (4), **en ce que** l'on approche des points de calibrage (8, 9, 10) sur un corps de calibrage connu (1), sur lesquels un plan tangent respectif (8a, 9a, 10a) est au moins approximativement parallèle à un plan tangent (5a, 6a, 7a) d'au moins un point de mesure quelconque choisi (5, 6, 7), les coordonnées du point de calibrage correspondant sur le corps de calibrage étant déterminées sur la base des données des différents points de mesure (5, 6, 7) et des coordonnées théoriques et une valeur de correction étant déterminée pour chaque processus de palpage sur le corps de calibrage (1), et **en ce que** l'on effectue des mesures avec le palpeur de mesure sur les points de mesure choisis, un vecteur d'approche normalisé et une vitesse d'approche pour approcher un point de calibrage (8, 9, 10) et un point de mesure correspondant (5, 6, 7) sur la pièce usinée (4) étant au moins essentiellement identiques, **en ce que** les vecteurs d'approche pour le point de mesure et les points de calibrage sont au moins sensiblement orthogonaux au plan tangent, et la valeur de correction déterminée d'un point de calibrage (8, 9, 10) étant évaluée sur le corps de calibrage (1) pour déterminer la valeur mesurée d'un point de mesure correspondant (5, 6, 7).

2. Procédé selon la revendication 1,
**caractérisé en ce que** le processus d'approche des points de mesure (5, 6, 7) sur la pièce usinée (4) est réalisé de sorte qu'il se produit des déplacements aussi courts que possible.

3. Procédé selon l'une des revendications précédentes,
**caractérisé en ce que** l'on effectue d'abord la mesure sur les points de mesure choisis (5, 6, 7), et **en ce que** l'on détermine ensuite une valeur de correction correspondante sur le corps de calibrage (1) pour déterminer à partir de là des valeurs mesurées corrigées.

4. Procédé selon l'une des revendications précédentes,
**caractérisé en ce que** le vecteur d'approche pour le point de mesure respectif (5, 6, 7) et le point de calibrage correspondant (8, 9, 10) est au moins approximativement orthogonal au plan tangent respectif (5a, 6a, 7a, 8a, 9a, 10a).

5. Procédé selon l'une des revendications précédentes,
**caractérisé en ce que** le rapport temporel entre calibrage et mesure est choisi relativement court.

6. Procédé selon l'une des revendications précédentes,
**caractérisé en ce que** l'on calibre un point (8) et **en ce que** l'on mesure ensuite le point de mesure correspondant (5) sur la pièce usinée.

7. Procédé selon l'une des revendications précédentes,
**caractérisé en ce que** l'on calibre plusieurs points (8, 9) et **en ce que** l'on mesure ensuite les points de mesure correspondants (5, 6).

8. Dispositif de mesure en trois dimensions de pièces usinées (4) sur une machine-outil, dans laquelle les coordonnées théoriques d'une pièce à fabriquer (4) sont mises à disposition sous une forme exploitable informatiquement en tant que coordonnées XYZ de la machine-outil pour le déplacement de l'outil pour la fabrication de la pièce usinée, comportant un palpeur de mesure (2) et une unité de calcul,
**caractérisé en ce que** l'unité de calcul est prévue pour choisir des points de mesure quelconques (5, 6, 7) sur la pièce usinée (4), sur lesquels le palpeur de mesure (2) doit effectuer une mesure sur la pièce usinée véritablement finie (4), et pour effectuer un processus de palpage du palpeur de mesure (2) sur un corps de calibrage connu (1) au niveau de points (8, 9, 10), sur lesquels un plan tangent respectif (8a, 9a, 10a) est au moins approximativement parallèle à un plan tangent (5a, 6a, 7a) d'au moins un point de mesure quelconque choisi (5, 6, 7), l'unité de calcul déterminant les points de calibrage correspondants (8, 9, 10) sur le corps de calibrage (1) sur la base des données des points de mesure respectifs (5, 6, 7) et des coordonnées théoriques et l'unité de calcul déterminant une valeur de correction pour chaque processus de palpage sur le corps de calibrage (1) et **en ce que** l'unité de calcul est prévue pour approcher le palpeur de mesure sur les points de mesure choisis (5, 6, 7) sur la pièce usinée finie afin de réaliser une mesure, des vecteurs d'approche normalisés et des vitesses d'approche pour approcher les points de calibrage respectifs (8, 9, 10) et les points de mesure correspondants (5, 6, 7) sur la pièce usinée étant au moins essentiellement identiques, **en ce que** les vecteurs d'approche pour le point de mesure et les points de calibrage sont au moins sensiblement orthogonaux au plan tangent, et la valeur de correction déterminée respective d'un point de calibrage (8, 9, 10) sur le corps de calibrage (1) étant évaluée pour déterminer la valeur mesurée d'un point de mesure (5, 6, 7) avec un plan tangent (5a, 6a, 7a) au moins approximativement parallèle au point de calibrage respectif (8, 9, 10).

9. Dispositif selon la revendication 8,
**caractérisé en ce que** l'unité de calcul est un PC externe

10. Dispositif selon la revendication 8 ou 9,
**caractérisé en ce que** l'unité de calcul est un ordinateur de commande de la machine-outil.
